# EUROPÄISCHE PATENTSCHRIFT

(11) **EP 1 406 850 B1**
(45) Veröffentlichungstag und Bekanntmachung des Hinweises auf die Patenterteilung: **17.12.2008**
(21) Anmeldenummer: 02754880.9
(22) Anmeldetag: 12.07.2002
(51) Int. Cl.: C04B 35/58

(54) **VERFAHREN ZUM KAPSELLOSEN UMFORMEN VON GAMMA-TIAl-WERKSTOFFEN**
METHOD FOR THE CAPSULELESS DEFORMATION OF GAMMA-TIAL MATERIALS
PROCEDE DE DEFORMATION SANS CAPSULE DE MATERIAUX GAMMA-TIAL

(30) Priorität: 16.07.2001 DE 10134525
(43) Veröffentlichungstag der Anmeldung: 14.04.2004
(73) Patentinhaber: GFE GESELLSCHAFT FÜR ELEKTROMETALLURGIE MBH, D-90431 Nürnberg (DE)
(72) Erfinder: CHATTERJEE, Anita, 90429 Nürnberg (DE); ACHTERMANN, Matthias, 90587 Veitsbronn (DE); RIX, Ricarda, 90408 Nürnberg (DE); GÜTHER, Volker, 90559 Burgthann (DE)
(74) Vertreter: Hübner, Gerd
(86) Internationale Anmeldenummer: PCT/EP2002/007791
(87) Internationale Veröffentlichungsnummer: WO 2003/008358

(56) Entgegenhaltungen:
- DE-A- 19 825 223
- US-A- 6 161 285

## Beschreibung

Aufgrund ihrer mechanischen Eigenschaften müssen eine Vielzahl von Werkstoffen, insbesondere die hochschmelzenden Metalle Wolfram und Molybdän sowie deren metallische Legierungen bei sehr hohen Temperaturen umgeformt werden. Dies wird technisch im industriellen Maßstab durchgeführt, indem die Werkstoffe in Schutzgasöfen auf die Umformtemperatur, vorgewärmt werden und anschließend mittels Strangpressen (z.B. Mo-Glasschmelzelektroden) oder Walzen (z.B. Mo- und W-Bleche) eine Massivumformung mittels geheizter Werkzeuge erfahren. Die Werkzeuge (z.B. Strangpreßmatrizen oder Walzkörper) werden dabei auf Temperaturen von bis zu 800°C vorgeheizt, um das Auskühlen der Werkstücke während des Umformprozesses möglichst gering zu halten. Als Werkzeugmaterialien finden vorzugsweise Superlegierungen, ODS (Oxide Dispersion Strenghtened)-Legierungen sowie Hartmetalle Anwendung.

Neue Klassen von Strukturwerkstoffen, insbesondere intermetallische Phasen, weisen mögliche Umformfenster auf, die eine quasi-isotherme Umformung im Temperaturbereich >1000°C bis hin zu 1400°C erfordern. In diesem Temperaturbereich besitzen selbst die für höchste Anwendungstemperaturen konzipierten ODS-Superlegierungen keine ausreichenden Festigkeiten mehr, um die bei der Massivumformung entstehenden Umformkräfte aufzunehmen. Gleiches gilt für Heißpreßwerkzeuge, so daß hier oftmals auf Materialien wie Graphit und/oder SiC ausgewichen werden muß. Im Falle von Heißpreßwerkzeugen für die Herstellung von Hartmetall- und Diamantwerkzeugen werden Preßmatrizen und -stempel in höchstem Maße thermomechanisch beansprucht und verschleißen daher sehr schnell. Im Falle von Umformwerkzeugen reichen selbst die durch Faser- oder Partikelverstärkungen erhöhten Festigkeiten nicht aus, um im gewünschten Temperaturfenster arbeiten zu können. Keramische Werkstoffe erweisen sich aufgrund ihrer Sprödigkeit und mangelhaften ThermoschockBeständigkeit als ebenfalls nicht geeignet.

In den letzten Jahren sind intermetallische Legierungen auf der Basis von γ-TiAl intensiv erforscht worden. Durch gezielte Legierungsbildung und Gefügeeinstellungen lassen sich Eigenschaftsprofile generieren, die γ-TiAl im Turbinen- und Triebwerksbau sowie in der Motorentechnologie als aussichtsreichen Leichtbau-Werkstoff mit hoher Warmfestigkeit erscheinen lassen. Ein wichtiger Technologieschritt zur Verbesserung von mechanischen Eigenschaften ist dabei die Massivumformung, die entsprechend der zahlreichen Patentliteratur im Temperaturbereich zwischen 900°C und 1400°C, vorzugsweise zwischen 1250°C und 1350°C stattfindet. Die Umformung muß aus werkstoffkundlicher Sicht isotherm geschehen. Aus diesem Grund wurden Kapseltechnologien entwickelt, die ein Auskühlen des eingekapselten TiAl weitgehend vermeiden, so daß Strangpressen und Walzen von TiAl möglich wurde, so beispielsweise H. Clemens et al. "Processing of γ-TiAl Based Alloys on an Industrial Scale", Gamma Titanium Aluminides 1999, Ed. Y.-W. Kim, D. M. Dimiduk, M. H. Loretto, Proc. of the 2nd Int. Symp. on Gamma Titanium Aluminides, 1-4 März 1999, San Diego, TMS Veröffentlichung 1999. Die Kapseltechnologien sind sehr aufwendig (siehe z.B. DE-A-197 47 257) und bilden einen wesentlichen Kostenbestandteil bei der Herstellung von TiAl-Bauteilen.

Die Massivumformung von TiAl-Werkstoffen durch Walzen und Strangpressen geschieht stets im gekapselten Zustand. Die Kapsel (Kanne) besitzt zwei Funktionen:
1. Verhinderung des Zutritts von Luft
2. Verlangsamung des Auskühlens des gekapselten TiAl.

Beim Strangpressen wird ein schmelzmetallurgisch hergestellter VAR-Ingot mit Molybdän als Diffusionssperrschicht beschichtet, zusätzlich in Molybdänfolie eingewickelt und zusammen mit dieser Molybdänfolie in eine Stahlkanne gegeben. Die Kanne wird durch Schweißen dicht verschlossen und auf die Umformtemperatur aufgeheizt. Nach Erreichen der Umformtemperatur wird die Kanne samt Ingot in eine Strangpreßmatrize gegeben, die auf bis zu 900°C aufgeheizt ist und deren Temperatur sich somit deutlich unterhalb der Umformtemperatur befindet. Beim Strangpressen kühlt zunächst die dicke Stahlkanne aus, ohne daß der strangzupressende Ingot nennenswert Temperatur verliert. Aufgrund des Isolationseffektes der Kanne kann man von quasi-isothermen Umformverhältnissen sprechen.

Beim Walzen wird von einer Pulverschüttung in eine mit Molybdän ausgekleidete Kanne ausgegangen. Das Pulver wird zunächst heißisostatisch zu einem quaderförmigen Körper verdichtet (HIP). Die Kanne samt TiAl wird auf Umformtemperatur aufgeheizt und in einem beheizten Walzwerk ausgewalzt. Nach dem Walzen erfolgt ein erneutes Aufheizen auf die Prozeßtemperatur, und weitere Walzschritte folgen.

Das Kapselverfahren ist insgesamt sehr aufwendig und es besteht ein erhebliches Bedürfnis nach einem Verfahren, mit welchem γ-TiAl-Werkstoffe kapsellos umgeformt werden können.

Molybdän-Disilicid (MoSi₂) ist als korrosionsbeständiger Werkstoff mit gegenüber Keramiken verbesserter Thermoschockbeständigkeit seit vielen Jahren unter dem Markennamen Super-Kanthal bekannt. Die Nachteile der intermetallischen Phase, die einen Einsatz als Konstruktionswerkstoff bisher nicht zulassen, bestehen neben grundsätzlichen technologischen Problemen bei der Herstellung von dichten Bauteilen vor allen Dingen in der ungenügenden Bruchzähigkeit und der schlechten Kriechfestigkeit. Analog zu ODS-Superlegierungen wird versucht, durch den Einbau von Partikelverstärkungen (insbesondere Carbide, Oxide und Boride der Refraktär- und Übergangsmetalle) das Eigenschaftsprofil zu verbessern.

Die Herstellung von MoSi₂-Halbzeugen geschieht ausschließlich auf pulvermetallurgischem Weg unter Verwendung von vorgebildeten MoSi₂-Pulvern und Heißpressen/HIP bzw. durch eine kontrollierte Synthese bei der Sinterung von hochenergievermahlenen Mo- und Si-Pulvern. Die DE-A-198 25 223 beschreibt Formwerkzeuge aus pulvermetallurgisch hergestellten Kompositwerkstoffen auf der Basis einer intermetallischen Phase, beispielsweise auf der Basis von MOSi₂ oder Mo₅Si₃, wobei Verstärkungskomponenten während des Hochenergie-Mahlvorganges zugegeben und/oder während eines Reaktions-Sintervorganges in-situ ausgebildet werden können. Konkrete Beispiele, bei denen Verstärkungskomponenten in-situ während des Sintervorganges ausgebildet werden, fehlen in dieser Druckschrift.

Versuche haben ergeben, daß Umformungswerkzeuge aus solchen Werkstoffen, bei denen die Verstärkungskomponenten während des Hochenergie-Mahlvorganges zugesetzt worden sind, für kapselloses Umformen von γ-TiAl-Werkstoffen nicht geeignet sind. Die Hochtemperatureigenschaften solcher Umformungswerkzeuge, insbesondere die Bruchzähigkeit bei den erforderlichen hohen Temperaturen von 900°C bis 1400°C, sind nicht ausreichend.

Aufgabe der Erfindung ist es daher, ein Verfahren zur Verfügung zu stellen, mit dem kapsellos γ-TiAl-Werkstücke umgeformt werden können.

Überraschenderweise hat sich herausgestellt, daß aber Umformungswerkzeuge dafür geeignet sind, bei denen die Verstärkungskomponenten während des Reaktions-Sintervorganges in-situ ausgebildet werden. Mit solchen Werkzeugen lassen sich γ-TiAl-Werkstoffe kapsellos bei Temperaturen von 900°C bis 1400°C in der gewünschten Weise umformen.

Die erfindungsgemäße Aufgabe wird daher durch ein Verfahren zum kapsellosen Umformen von γ-TiAl-Werkstoffen bei Temperaturen von 900°C bis 1400°C gelöst, welches dadurch gekennzeichnet ist, daß die Umformung mit Hilfe von Umformungswerkzeugen aus partikelverstärkten X₅Si₃- oder XSi₂-Werkstoffen durchgeführt wird, wobei X Mo, Nb, Ta, W, Hf, V, Zr, Ti, Cr, Re oder Fe ist, und wobei die Partikelverstärkungs-Komponenten durch in-situ ablaufende chemische Reaktionen während des Sintervorganges aus Vorstoffen gebildet werden, die den zur Herstellung der X₅Si₃- oder XSi₂-Werkstoffe dienenden aktivierten Pulvermischungen vor dem Aktivierungsprozeß, welcher vorzugsweise durch Hocheneregiemahlen erfolgt, zugesetzt worden sind.

Als Partikelverstärkungen kommen Carbide, Oxide, Nitride, Boride oder intermetallische Phasen in Betracht. Vorzugsweise bestehen die Partikelverstärkungen aus Al₂O₃, SiC, Y₂O₃, den Oxiden, Boriden und Carbiden der Refraktärmetalle Ti, Cr, V, Zr, Mo, W, Hf, Nb, Ta und den Oxiden der Seltenen Erden.

Die Erfindung wird nachstehend stellvertretend an bevorzugten MoSi₂-Werkstoffen näher beschrieben.

Die Lösung der weiter oben beschriebenen Aufgabe beruht auf der Verwendung von MoSi₂-Kompositen als Werkstoff für das Umformwerkzeug für intermetallisches γ-TiAl, der aufgrund des erfindungsgemäßen Herstellungsverfahrens des MoSi₂-Kompositwerkstoffs ein deutlich verbessertes thermomechanisches Eigenschaftsprofil gegenüber bekannten MoSi₂-Kompositen aufweisen. MoSi₂-Komposite besitzen eine ausgezeichnete Oxidationsbeständigkeit durch Ausbildung einer SiO₂-Oberflächenschicht. Überraschenderweise hat sich herausgestellt, daß die SiO₂-Oberflächenschicht gleichzeitig als Schmierstoff zwischen TiAl und Matrix dient und keine Festkörperreaktionen zwischen dem ansonsten sehr reaktiven TiAl und dem MoSi₂ stattfinden.

Die Herstellung des Werkstoffes basiert auf dem Verfahren der Herstellung von aktivierten Pulvermischungen (DE-C-44 18 598). Die Verstärkungskomponenten werden in-situ beim Sintern der aktivierten Pulvermischungen gebildet. Dazu werden in die Pulvermischungen zusätzlich die Elemente der Verstärkungskomponenten in einer nicht abrasiven Form (Kohlenstoff für SiC, Hydride von Oxid-, Carbid- und Boridbildnern in Verbindung mit Mo-Oxid, Kohlenstoff, oder Borsäure) zugegeben und gleichmäßig während des Aktivierungsprozesses, vorzugsweise durch Hochenergiemahlen, feinst verteilt. Beim Sintern werden als erstes die Partikelverstärkungen durch in-situ ablaufende Reaktionen gebildet, anschließend erfolgt die Ausbildung der MoSi₂-Matrix. Die hochaktivierten Pulver können bis zum Porenabschluß gesintert oder über Heißpreßverfahren verdichtet werden.

Aus solchermaßen hergestellten Materialien gefertigte Umformungswerkzeuge, die einstückig oder mehrstückig sind, können mit Erfolg zum kapsellosen Umformen, beispielsweise zum kapsellosen Strangpressen, von γ-TiAl-Werkstoffen bei 900°C bis 1400°C herangezogen werden, da sie ausgezeichnete Hochtemperatureigenschaften, wie z.B. Hochtemperatur- und Abrasionsbeständigkeit, Bruchzähigkeit, etc., bei hohen Temperaturen aufweisen.

Die Umformungswerkzeuge können mit oder ohne Schmierung betrieben werden. Es kann auch eine nicht als Schmierung dienende Beschichtung (z.B. eine Hartstoffschicht) auf das Umformungswerkzeug aufgebracht werden.

Zur Vermeidung von Verschweißerscheinungen zwischen den Umformungswerkzeugteilen und dem Werkstück können Trennmittel verwendet werden, die unerwünschte chemische und/oder physikalische Wechselwirkungen zwischen diesen Teilen und dem zu pressenden Werkstoff verhindern.

Die Erfindung wird nachstehend durch die folgenden Beispiele näher erläutert.
a) MoSi₂ mit Y₂O₃-Partikelverstärkungen
b) MoSi₂ mit SiC-Partikelverstärkungen
c) MoSi₂ mit Mo₂B-Partikelverstärkungen

| | | | | | |
|---|---|---|---|---|---|
| a) | Mo-Pulver | b) | Mo-Pulver | c) | Mo-Pulver |
| | MoO₂-Pulver | | Si-Pulver | | SiB₃-Pulver |
| | Si-Pulver | | C-Pulver (Ruß) | | Si-Pulver |
| | YH₂-Pulver | | | | |

Die Pulvermischungen werden in einer Planetenkugelmühle mit hoher Intensität 8 h lang gemahlen. Die entstehenden Pulvermischungen sind nanokristallin und werden zu Körpern verpreßt. Aufgrund einer bereits im Ansatz nachweisbaren Phasenbildung während des Mahlvorganges laufen die chemischen Reaktionen zur Bildung der Partikelverstärkungen wie auch der Silicidmatrix während des sich anschließenden Sinterprozesses gesteuert ab. Ohne die Hochenergievermahlung würde es aufgrund der hohen Exothermie zu einer in der Literatur beschriebenen selbstfortschreitenden Hochtemperatursynthese des MoSi₂ kommen. Nacheinander können folgende Reaktionen gezielt gesteuert werden:

| | | | | |
|---|---|---|---|---|
| a) | 1. T = 0-400°C | YH₂ | → | Y + 2H |
| | 2. T = 600-800°C | 3MoO₂+ 4Y | → | 3Mo + 2Y₂O₃ |
| | 3. T = 800-1200°C | Mo + 2Si | → | MoSi₂ |
| | 4. T = 1600°C | Sinterung bis zum Porenabschluß | | |
| | | | | |
| b) | 1. T = 600-800°C | Si + C | → | SiC |
| | 2. T = 800-1200°C | Mo + 2Si | → | MoSi₂ |
| | 3. T = 1600°C | Sinterung bis zum Porenabschluß | | |
| | | | | |
| c) | 1. T = 800-1200°C | Mo + 2Si | → | MoSi₂ |
| | 2. T = 1000-1400°C | SiB₃ + 6Mo | → | 3Mo₂B + Si |
| | 3. T > 1400°C | ½ Mo + Si | → | ½ MoSi₂ |
| | 4. T = 1700°C | Sinterung bis zum Porenabschluß | | |

In allen drei Fällen ergeben sich ausgezeichnete Hochtemperatur-Molybdänsilicid-Werkstoffe, die sich zum kapsellosen Umformen von γ-TiAl-Werkstoffen bei 1100°C bis 1400°C eignen.

Weitere, nach diesem Verfahren herstellbare Komposite:

MoSi₂ + Ta₂O₅ / Nb₂O₅ / SiO₂ / Al₂O₃ / HfO₂ / ZrO₂ /CaO / MgO

Y₂O₃ und andere Oxide der Seltenen Erden
SiC / TiC/ TaC / Ta₂C / NbC / Nb₂C / WC und andere
Carbide der Refraktärmetalle
Mo₂B / TiB / NbB / HfB und andere Boride der Refraktärmetalle

## Patentansprüche

1. Verfahren zum kapsellosen Umformen von γ-TiAl-Werkstoffen bei Temperaturen von 900°C bis 1400°C, **dadurch gekennzeichnet, daß** die Umformung mit Hilfe von Umformungswerkzeugen aus partikelverstärkten X₅Si₃- oder XSi₂-Werkstoffen durchgeführt wird, wobei X Mo, Nb, Ta, W, Hf, V, Zr, Ti, Cr, Re oder Fe ist, und wobei die Partikelverstärkungs-Komponenten durch in-situ ablaufende chemische Reaktionen während des Sintervorganges aus Vorstoffen gebildet werden, die den zur Herstellung der X₅Si₃- oder XSi₂-Werkstoffe dienenden aktivierten Pulvermischungen vor dem Aktivierungsprozeß zugesetzt worden sind.

2. Verfahren nach Anspruch 1, **dadurch gekennzeichnet, daß** die Partikelverstärkungen Carbide, Oxide, Boride, Nitride oder intermetallische Phasen sind.

3. Verfahren nach den Ansprüchen 1 oder 2, **dadurch gekennzeichnet, daß** die Partikelverstärkungen aus Al₂O₃, SiC, Y₂O₃, den Oxiden, Boriden und Carbiden der Refraktärmetalle Ti, Cr, V, Zr, Mo, W, Hf, Nb, Ta und den Oxiden der Seltenen Erden bestehen.

4. Verfahren nach mindestens einem der Ansprüche 1 bis 3, **dadurch gekennzeichnet, daß** XSi₂ MoSi₂ ist.

5. Verfahren nach Anspruch 1, dadruch **gekennzeichnet**, daß der Aktivierungsprozeß der Pulvermischung durch Hochenergiemahlen erfolgt.

6. Verfahren nach mindestens einem der Ansprüche 1 bis 5,
**dadurch gekennzeichnet, daß** die Umformungswerkzeuge einstückig oder mehrstückig sind.

7. Verfahren nach mindestens einem der Ansprüche 1 bis 6, **dadurch gekennzeichnet, daß** es zum kapsellosen Strangpressen von γ-TiAl-Werkstoffen dient.

8. Verfahren nach mindestens einem der Ansprüche 1 bis 7, **dadurch gekennzeichnet, daß** die Umformungswerkzeuge mit oder ohne Schmierung betrieben werden.

9. Verfahren nach mindestens einem der Ansprüche 1 bis 8, **dadurch gekennzeichnet, daß** eine nicht als Schmierung dienende Beschichtung auf das Umformungswerkzeug aufgebracht wird.

10. Verfahren nach mindestens einem der Ansprüche 1 bis 9, **dadurch gekennzeichnet, daß** zur Vermeidung von Verschweißerscheinungen zwischen den Umformungswerkzeugteilen und dem Werkstück Trennmittel verwendet werden, welche unerwünschte chemische und/oder physikalische Wechselwirkungen zwischen diesen Teilen und dem zu pressenden Werkstoff verhindern.

## Claims

1. Method for the capsuleless forming of γ-TiAl materials at temperatures of between 900 °C and 1400 °C, **characterised in that** the forming is carried out by means of forming tools consisting of particle-reinforced X₅Si₃ materials or XSi₂ materials, wherein X represents Mo, Nb, Ta, W, Hf, V, Zr, Ti, Cr, Re or Fe, and wherein the particle reinforcement constituents are formed by means of chemical reactions in situ, during the sintering process, from precursor materials which have been added, before the activation process, to the activated powder mixtures used for producing the X₅Si₃ materials or XSi₂ materials.

2. Method according to claim 1, **characterised in that** the particle reinforcements are carbides, oxides, borides, nitrides or intermetallic phases.

3. Method according to claims 1 or 2, **characterised in that** the particle reinforcements consist of Al₂O₃, SiC, Y₂O_{3,} the oxides, borides and carbides of the refractory metals Ti, Cr, V, Zr, Mo, W, Hf, Nb, Ta, and the oxides of the rare-earth metals.

4. Method according to at least one of claims 1 to 3, **characterised in that** XSi₂ is MoSi₂.

5. Method according to claim 1, **characterised in that** the activation process of the powder mixture is carried out by high-energy milling.

6. Method according to at least one of claims 1 to 5, **characterised in that** the forming tools are one-piece or multi-piece tools.

7. Method according to at least one of claims 1 to 6, **characterised in that** the method serves for capsuleless extrusion of γ-TiAl materials.

8. Method according to at least one of claims 1 to 7, **characterised in that** the forming tools are operated with or without lubrication.

9. Method according to at least one of claims 1 to 8, **characterised in that** a coating is applied to the forming tool, said coating not serving for lubrication.

10. Method according to at least one of claims 1 to 9, **characterised in that** in order to prevent welding phenomena, separating agents are used between the forming tool parts and the workpiece, said separating agents preventing unwanted chemical and/or physical interactions between these parts and the material to be extruded.

## Revendications

1. Procédé de déformation sans capsule de matériaux de γ-TiAl à des températures de 900° C à 1400° C, **caractérisé en ce que** la déformation est réalisée à l'aide d'outils de déformation en matériaux à base de X₅Si₃ ou XSi₂ renforcés par des particules, X étant Mo, Nb, Ta, W, Hf, V, Zr, Ti, Cr, Re ou Fe et les composants renforcés par des particules étant formés par des réactions chimiques se déroulant in situ pendant le processus de frittage à partir de substances précurseurs qui sont ajoutées aux mélanges de poudres activés servant à la production de X₅Si₃ ou XSi₃ avant le processus d'activation.

2. Procédé selon la revendication 1, **caractérisé en ce que** les renforcements particulaires sont constitués de carbure, oxyde, borure, nitrure ou de phases intermétalliques.

3. Procédé selon les revendications 1 ou 2, **caractérisé en ce que** les renforcements particulaires sont constitués de Al₂O₃, SiC, Y₂O₃, d'oxydes, de borures et carbures des métaux réfractaires Ti, Cr, V, Zr, Mo, W, Hf, Nb, Ta et des oxydes des terres rares.

4. Procédé selon au moins l'une des revendications 1 à 3, **caractérisé en ce que** XSi₂ est MOSi₂.

5. Procédé selon la revendication 1, **caractérisé en ce que** le processus d'activation du mélange de poudres s'effectue par broyage à haute énergie.

6. Procédé selon au moins l'une des revendications 1 à 5, **caractérisé en ce que** les outils de déformation sont constitués d'une pièce ou de plusieurs pièces.

7. Procédé selon au moins l'une des revendications 1 à 6,
**caractérisé en ce qu'**il sert de presse à gainer des matériaux γ-TiAl.

8. Procédé selon au moins l'une des revendications 1 à 7, **caractérisé en ce que** les outils de déformation sont actionnés sans graissage.

9. Procédé selon au moins l'une des revendications 1 à 8, **caractérisé en ce qu'**un revêtement ne servant pas de graissage est appliqué sur l'outil de déformation.

10. Procédé selon au moins l'une des revendications 1 à 9, **caractérisé en ce que**, pour éviter des manifestations de ressoudage entre les parties des outils de déformation et la pièce usinée, on utilise un agent anti-agglomérant qui empêche les interactions chimiques et/ou physiques indésirables entre ces parties et le matériau à compresser.
